# EUROPEAN PATENT SPECIFICATION

(11) **EP 4 621 548 B1**
(45) Date of publication and mention of the grant of the patent: **17.06.2026**
(21) Application number: 25164969.5
(22) Date of filing: 20.03.2025
(51) Int. Cl.: G06F 3/12

(54) **NON-TRANSITORY COMPUTER-READABLE STORAGE MEDIUM STORING PRINTING CONTROL PROGRAM, PRINTING SYSTEM, AND PRINTED MATTER PRODUCTION METHOD**
NICHTTRANSITORISCHES COMPUTERLESBARES SPEICHERMEDIUM MIT DARAUF GESPEICHERTEM DRUCKSTEUERUNGSPROGRAMM, DRUCKSYSTEM UND DRUCKSACHENHERSTELLUNGSVERFAHREN
SUPPORT D'INFORMATIONS LISIBLE PAR ORDINATEUR NON TRANSITOIRE STOCKANT UN PROGRAMME DE COMMANDE D'IMPRESSION, SYSTÈME D'IMPRESSION ET PROCÉDÉ DE PRODUCTION DE MATIÈRE IMPRIMÉE

(30) Priority: 22.03.2024 JP 2024046158
(43) Date of publication of application: 24.09.2025
(73) Proprietor: Seiko Epson Corporation, Tokyo 160-8801 (JP)
(72) Inventor: INOUE, Masatsugu, Suwa-shi, 392-8502 (JP)
(74) Representative: Lewis Silkin LLP

(56) References cited:
- US-A1- 2014 362 412
- US-A1- 2020 110 559

## Description

### BACKGROUND

### 1. Technical Field

The present disclosure relates to a non-transitory computer-readable storage medium storing a printing control program, a printing system, and a printed matter production method.

### 2. Related Art

JP-A-2021-56754 discloses a technique for causing a printer to perform booklet printing in an information processing device including an operating system (OS) standard printer driver, which is an OS standard printing program.

Incidentally, printing processing using an image difference cannot be said to be general-purpose processing, and is not supported by a general-purpose printer driver such as the OS standard printer driver. Therefore, it is desired to develop a technique that enables printing using an image difference in an environment where printing processing is performed using a general-purpose printer driver.
US 2020/110559 A1 discloses an information processing apparatus having a shared printer driver that communicates with a printing apparatus. US 2014/362412 A1 discloses a method of adding value to print data output from a computer application without modifying the existing application program.

### SUMMARY

A non-transitory computer-readable storage medium storing a printing control program according to one aspect of the present disclosure is provided according to claim 1.

A printing system according to one aspect of the present disclosure is provided according to claim 6.

A printed matter production method according to one aspect of the present disclosure is provided according to claim 7.

### BRIEF DESCRIPTION OF THE DRAWINGS

FIG. 1 is a block diagram illustrating a configuration example of a printing system according to an embodiment.
FIG. 2 is a sequence diagram illustrating a first example of generation processing in the printing system in FIG. 1.
FIG. 3 is a sequence diagram illustrating a second example of the generation processing in the printing system in FIG. 1.
FIG. 4 is a sequence diagram illustrating an example of serial number printing processing in the printing system in FIG. 1.
FIG. 5 is a sequence diagram following FIG. 4.
FIG. 6 is a diagram illustrating an example of a user interface image displayed in the serial number printing processing in FIGS. 4 and 5.
FIG. 7 is a diagram illustrating another example of the user interface image displayed in the serial number printing processing in FIGS. 4 and 5.
FIG. 8 is a schematic diagram illustrating an example of a series of printed matters printed in the serial number printing processing in FIGS. 4 and 5.
FIG. 9 is a sequence diagram illustrating an example of variable printing processing in the printing system in FIG. 1.
FIG. 10 is a sequence diagram following FIG. 9.
FIG. 11 is a schematic diagram illustrating an example of a character string file referred to in the variable printing processing in FIGS. 9 and 10, and illustrating an example of a series of printed matters printed in the variable printing processing with reference to the character string file.
FIG. 12 is a diagram illustrating an example of a hardware configuration of a device.

### DESCRIPTION OF EMBODIMENTS

Hereinafter, an embodiment according to the present disclosure will be described with reference to the drawings. The drawings are merely an example illustrating the embodiment of the present disclosure. Not all components described in the embodiment of the present disclosure are essential components of the present disclosure.

### Embodiment

### Configuration of System

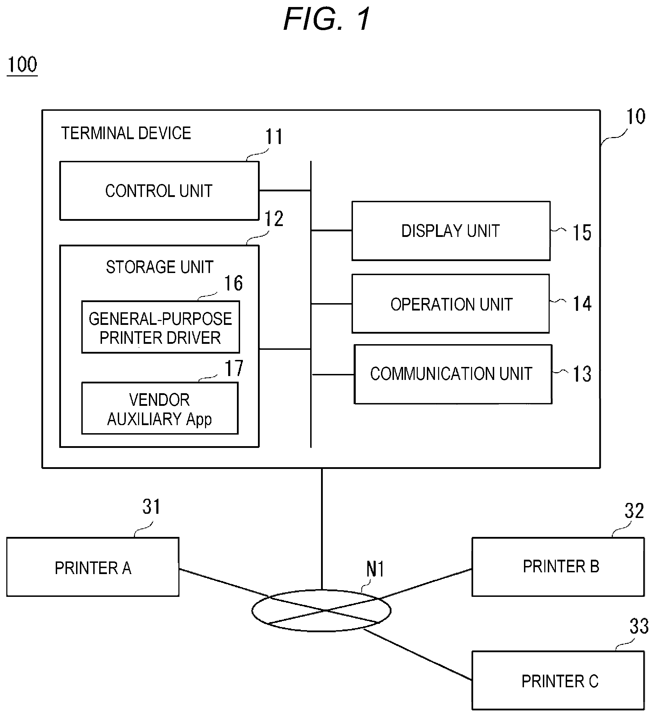

A configuration example of a printing system according to the embodiment will be described with reference to FIG. 1. FIG. 1 is a block diagram illustrating the configuration example of the printing system according to the embodiment.

As illustrated in FIG. 1, a printing system 100 according to the embodiment can include a terminal device 10, a printer A (31), a printer B (32), and a printer C (33).

The terminal device 10 is an information processing device having a communication function, such as a personal computer (PC), a smartphone, or a tablet terminal, and can be used by a user who desires printing. The terminal device 10 may be a portable information processing device or an installation-type information processing device. The terminal device 10 can be connected to the printer A (31), the printer B (32), and the printer C (33) via a network N1. Although not illustrated, the printing system 100 can include a plurality of the terminal devices 10.

All of the printer A (31), the printer B (32), and the printer C (33) are examples of a printer and can print printing data on a medium when receiving the printing data. Each of the printers produces a printed matter by performing printing in this way. For convenience, the description is made on an assumption that the printing system 100 includes three printers as described above. However, a plurality of printers may be included. Each of the printers can also be referred to as a printing device or an image formation device. A printing method in each of the printers does not matter, and various printing methods such as an inkjet printing method or a laser printing method can be applied. The printers included in the printing system 100 may have the same model or different models.

Each of the printers may be a device having a printing function and a communication function, or may be a multifunction device having other functions such as a scanner function, a copy function, and a facsimile transmission function.

The terminal device 10 can issue a printing instruction to a printer selected by a user operation from among printers registered and recognized as a printer that performs printing among the printer A (31), the printer B (32), and the printer C (33). In the following description, an example is described in which all of the printer A (31), the printer B (32), and the printer C (33) are registered and recognized as a printer that performs printing in the terminal device 10.

Hereinafter, a configuration example of the terminal device 10 will be described in detail. Description of a configuration example of each of the printers will be omitted.

### Configuration of Terminal Device 10

As illustrated in FIG. 1, the terminal device 10 can include a control unit 11, a storage unit 12, a communication unit 13, an operation unit 14, and a display unit 15.

The control unit 11 controls the entire terminal device 10. The control unit 11 can include, for example, an arithmetic processing device, a working memory, and a storage device that stores a control program, parameters, and the like. The above-described arithmetic processing device can be a central processing unit (CPU), a graphics processing unit (GPU), or the like. The control unit 11 can also be implemented as a system on a chip (SoC). As can be seen from these examples, the control unit 11 can store the control program in an executable state. The control unit 11 may have a configuration in which a part of the control program is stored as a circuit configuration such as a field-programmable gate array (FPGA), or may be implemented as a dedicated circuit.

The above-described control program can include a program for the arithmetic processing device to execute processing related to printing in cooperation with the storage unit 12, the communication unit 13, the operation unit 14, and the display unit 15. The above-described control program can include an OS. Since the OS is an OS mounted on the terminal device 10, a type of the OS depends on a model of the terminal device 10. The above-described control program can include a Web browser in the OS or outside the OS. In the following description, an example is described in which at least a part of the control program is stored in the storage unit 12 provided separately from the control unit 11. The storage unit 12 may be a part of a storage device in the control unit 11. That is, the storage unit 12 can be grasped as a part of the control unit 11.

The storage unit 12 is, for example, a storage device implemented by a hard disk drive, a solid state drive, or another memory. The storage unit 12 stores, as a part of the control program, a general-purpose printer driver 16 and a vendor auxiliary application program 17 to be described later in a state executable by the control unit 11. Hereinafter, the vendor auxiliary application program will be abbreviated as a vendor auxiliary App. The storage unit 12 can store various types of data such as a printing target file.

The communication unit 13 is a part for communicating wirelessly or wired with external devices such as the printers via the network N1 according to various mobile communication standards or predetermined communication standards such as the Wi-Fi (registered trademark, the same applies below) standard. The communication unit 13 can be implemented by one or a plurality of communication interfaces enabling such communications. The network N1 is usually a local area network (LAN). The communication interface is, for example, an antenna or a cable connector.

The operation unit 14 is a part for receiving operations of the user of the terminal device 10 and can also be referred to as an operation reception unit. The operation unit 14 can be implemented by, for example, one or more of a physical button, a touch panel mounted on the display unit 15, a pointing device, and a keyboard. In a configuration in which the operation unit 14 includes a touch panel, the display unit 15 and the touch panel can be collectively referred to as an operation panel of the terminal device 10.

The display unit 15 is a part for displaying a user interface (UI) image for operating the terminal device 10 and is implemented by a display device such as a liquid crystal display or an organic electroluminescence display. The display unit 15 can include a display and a drive circuit that drives the display.

The general-purpose printer driver 16 will be described. The general-purpose printer driver 16 is an OS standard printer driver that is included in or attached to the OS included in the control program. For example, the general-purpose printer driver 16 is a standard printer driver for Windows (registered trademark, the same applies below) OS. The general-purpose printer driver 16 can be a program capable of controlling the printers to perform printing for various types of printers. The general-purpose printer driver 16 can also be referred to as an OS general-purpose printing program or a general-purpose printing program.

The general-purpose printer driver 16 is a driver that uses a general-purpose protocol for searching for a printer and for printing. For example, the general-purpose printer driver 16 uses mDNS/DNS-SD for searching for a printer and uses IPP for printing in the printer. Here, DNS is an abbreviation for domain name system. mDNS is an abbreviation for multicast DNS. DNS-SD is an abbreviation for DNS service discovery. IPP is an abbreviation for internet printing protocol.

As can be seen from these examples, the general-purpose printer driver 16 can be, for example, an IPP class driver. IPP is an example of a standard protocol for controlling management and printing of the printer. The IPP acquires and controls printer information using hypertext transfer protocol (HTTP) POST requests and responses. In the IPP, the printer can be set and a state of the printer can be acquired. Here, secure communication can be performed by using HTTP secure (HTTPS) instead of HTTP.

The vendor auxiliary App 17 will be described. The vendor auxiliary App 17 is an application program for assisting the general-purpose printer driver 16 and is used to expand functions of the general-purpose printer driver 16. Therefore, the general-purpose printer driver 16 can have functions of starting the vendor auxiliary App 17 and transmitting a printing job to the vendor auxiliary App 17. The vendor auxiliary App 17 can be, for example, a print support application (PSA). One printing job refers to instructions for a series of operations for printing one or a plurality of printed matters and includes the printing data and printing settings. When printing a plurality of printed matters, one printing job can refer to instructions of a series of operations for printing printed matters having the same printing content.

The vendor auxiliary App 17 can be a program for assisting the general-purpose printer driver 16 and causing a computer to execute printing control suitable for performances of a target printer, that is, printing control for supporting a function unique to the printer. Here, the computer refers to the terminal device 10 or the control unit 11. In the embodiment, a printing function using an image difference is included as a function unique to the printer. When acquiring the printing job from the general-purpose printer driver 16, the vendor auxiliary App 17 can convert the printing job such that a designated printer can perform printing using a function unique to the printer. The conversion of the printing job can include conversion of the printing data.

The vendor auxiliary App 17 is an application program provided by, for example, a printer vendor. The vendor auxiliary App 17 can be provided to the user of the terminal device 10 by being disclosed in, for example, an application store of an OS provider. Alternatively, the vendor auxiliary App 17 can be provided to the user by being included in the OS or attached to the OS.

The vendor auxiliary App 17 includes a printing control program to be described later. That is, the printing control program can also be implemented as, for example, a PSA. The printing control program is a program for causing a computer to execute acquisition processing, display processing, generation processing, and instruction processing to be described later. Here, the computer also refers to the terminal device 10 or the control unit 11.

In the acquisition processing, the printing data is acquired from the general-purpose printer driver 16. The vendor auxiliary App 17 can acquire the printing data from the general-purpose printer driver 16 through inter-process communication. The printing data can be, for example, data for printing converted by the general-purpose printer driver 16 from a file to be printed that is designated by the user.

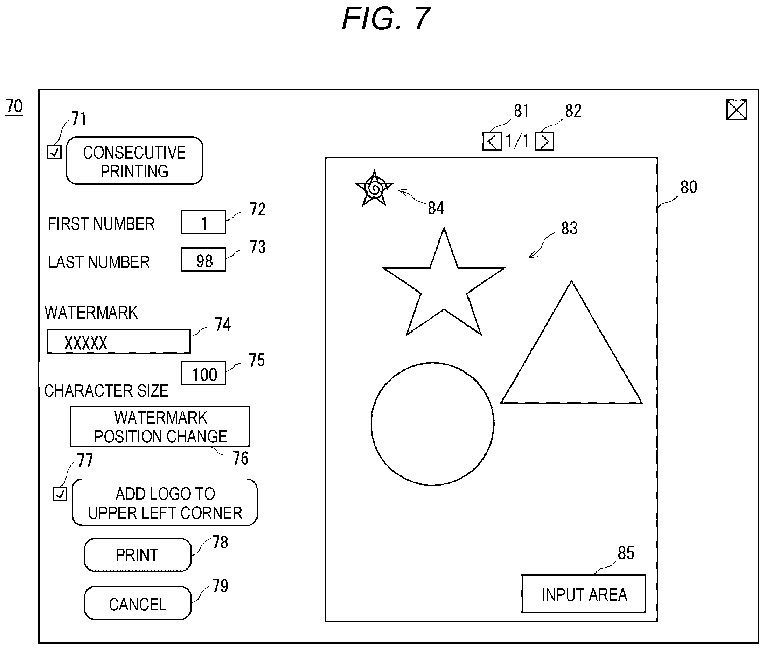

In the display processing, a UI image for allowing the user to designate additional data to be added to the printing data and an addition position of the additional data in the printing data, is displayed. The additional data can be character string data or image data. A display destination can be the display unit 15. An example of such a UI image will be described later with reference to FIG. 7. The UI image includes an image indicated by the printing data as a preview image, allowing the user to designate the additional data and the addition position while checking the additional data and the addition position.

The display processing can be performed on the printing data acquired in the acquisition processing. However, the display processing may be performed before the acquisition processing when a size of the image indicated by the printing data is set in advance. In this case, when the preview image is included in the UI image, the preview image may be, for example, a blank preview image. Even when the size of the image is not set in advance, the display processing can be performed if the addition position can be designated regardless of the size of the image, such as a center position, an upper left position, an upper right position, a lower left position, a lower right position, an upper center position, and a lower center position of the image. An upper side and a lower side of the image can be designated as a header region and a footer region, respectively.

In the generation processing, a printing job for performing printing in which the additional data is added to the printing data at the addition position is generated. In the instruction processing, the printer is instructed to perform printing based on the printing job. An instruction related to the instruction processing may be transmitted directly to the printer or may be transmitted to the printer via the general-purpose printer driver 16. The printer that receives this instruction, such as the printer A (31), performs the printing job to print an image indicated by data obtained by adding the additional data to the addition position in the printing data which is acquired in the acquisition processing. According to this printing, a printed matter obtained by adding the additional data to the addition position in the printing data is produced.

The printing job generated in the generation processing can include, for example, the printing data acquired in the acquisition processing, the additional data, and the addition position. For example, the additional data and the addition position can be included in the printing job as a printing setting in which the additional data is embedded in the printing data included in the printing job at the addition position. Alternatively, the generated printing job can include printing data corrected such that the additional data is embedded in the printing data acquired in the acquisition processing at the addition position. In this case, the vendor auxiliary App 17 generates a printing job including the corrected printing data, and transmits the printing job to a printer side in the instruction processing. Therefore, printing based on the printing job is simply performed without performing any processing related to addition on the printer side.

As described above, the printing control program according to the embodiment has been, and in other words, the embodiment can provide a printed matter production method including the acquisition processing, the display processing, the generation processing, and the instruction processing described above to produce a printed matter. In other words, the printed matter production method includes the acquisition processing of acquiring the printing data from the general-purpose printer driver, and the display processing of displaying the UI image for allowing the user to designate the additional data to be added to the printing data and the addition position of the additional data in the printing data. The printed matter production method further includes the generation processing of generating the printing job and the printing processing of performing printing based on the printing job by the printer to produce the printed matter in which the additional data is added to the printing data at the addition position.

In other words, the printing system 100 includes the terminal device exemplified by the terminal device 10 and a printer connected to the terminal device and exemplified by the printer A (31). The terminal device includes the general-purpose printer driver 16 and the following acquisition processing unit, display processing unit, generation processing unit, and instruction processing unit.

The acquisition processing unit acquires the printing data from the general-purpose printer driver 16. The display processing unit displays the UI image for allowing the user to designate the additional data to be added to the printing data and the addition position of the additional data in the printing data. The generation processing unit generates the printing job for performing printing in which the additional data is added to the printing data at the addition position. The instruction processing unit causes the printer to perform printing based on the printing job.

### Effects of Embodiment

Before describing a more specific example of the printing processing according to the embodiment, effects of the embodiment will be described.

As described above, in the printing system 100, as a printing instruction to the printer, the printing control program exemplified by the vendor auxiliary App 17 can transmit the printing instruction based on the printing job for adding the additional data to the printing data. Therefore, according to the embodiment, it can be said that it is possible to perform printing using the image difference that cannot be handled only by the general-purpose printer driver 16 in the printing processing using the general-purpose printer driver 16. That is, according to the embodiment, it is possible to perform printing using an image difference in an environment in which printing processing using a general-purpose printer driver is performed. For example, according to the embodiment, a function of performing printing using the image difference can be implemented by a printing control program for assisting the general-purpose printer driver 16 such as the PSA.

### Specific Example of Printing Processing according to Embodiment

In the following description, an example will be described in which printing is performed by the printer A (31) among the printers included in the printing system 100. The same applies when printing is performed using the printer B (32) or the printer C (33). In the following description, an example will be described in which the vendor auxiliary App 17 is implemented with the printing control program for performing the acquisition processing, the display processing, the generation processing, and the instruction processing described above.

As described above, the printing processing according to the embodiment includes the generation processing of generating the printing job for performing printing in which the additional data is added to the printing data at the addition position to perform the printing processing using the image difference. To perform the generation processing and the display processing which can be said to be preprocessing of the generation processing, the general-purpose printer driver 16 and the vendor auxiliary App 17 can have, for example, the following functions.

The general-purpose printer driver 16 has a function of transmitting data, not limited to the printing data, to the vendor auxiliary App 17. Specifically, the general-purpose printer driver 16 can also transmit, to the vendor auxiliary App 17, for example, background image data designated and input by the user operation, a designated addition position, and additional data that is data of designated character string or image. Here, the background image data can refer to image data indicating an image to be added with the character string or the image indicated by the additional data, or printing data for causing the printer to print the image.

The vendor auxiliary App 17 has a function of transmitting the background image data, the addition position, and the additional data to the general-purpose printer driver 16 or directly to the printer A (31) as the printing instruction. This function requires different transmission methods depending on whether the printer A (31) can store graphics.

When the printer A (31) does not have a function capable of storing graphics, the vendor auxiliary App 17 may generate the printing data in which the character string or the image indicated by the additional data is fitted to a background image indicated by the background image data at the addition position. Then, the vendor auxiliary App 17 may transmit the printing job including the generated printing data to the general-purpose printer driver 16 or directly to the printer A (31) as the printing instruction.

In contrast, when the printer A (31) has a function capable of storing graphics, the vendor auxiliary App 17 may transmit a setting for saving the background image data in the printer A (31) as a part of the printing instruction. As a part of the printing instruction, the vendor auxiliary App 17 may transmit an instruction to store or print the character string or the image, which is the additional data to be added to the addition position, superimposed the background image indicated by the background image data stored in the printer A (31). The setting and the instruction may be included in one printing job, and the vendor auxiliary App 17 may directly transmit the setting and the instruction to the general-purpose printer driver 16 or directly to the printer A (31).

Information indicating whether the printer A (31) has a graphic storage function can be held in advance by the vendor auxiliary App 17. Alternatively, the vendor auxiliary App 17 has a function of acquiring device information of the printer A (31) and determining whether the printer A (31) has a graphic storage function based on the device information. For example, the vendor auxiliary App 17 can acquire the IPP Attribute from the general-purpose printer driver 16 and perform this determination with reference to the IPP Attribute. More specifically, the vendor auxiliary App 17 can obtain, as the IPP Attribute, for example, a Printer Description Attribute, which is a description value of the printer A (31), and use the Printer Description Attribute for the determination.

### First Example of Generation Processing

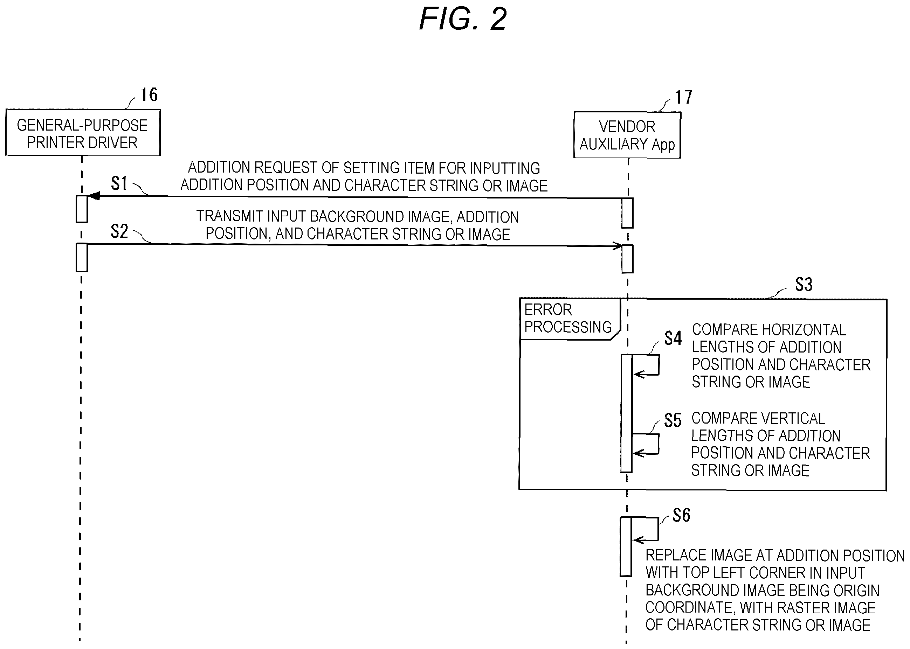

Next, a more specific example of the generation processing when the printer A (31) does not have a graphic storage function will be described with reference to FIG. 2 as a first example of the generation processing included in the printing processing according to the embodiment. FIG. 2 is a sequence diagram illustrating the first example of the generation processing in the printing system 100 in FIG. 1.

First, the user directly or via the general-purpose printer driver 16 activates the vendor auxiliary App 17, and instructs the start of the printing processing using the image difference. In response to this instruction, the vendor auxiliary App 17 issues, to the general-purpose printer driver 16, an addition request of setting items for inputting the background image data, the addition position, and the additional data which is data of a character string or an image (step S1). The general-purpose printer driver 16 may originally display an item for designating the background image data. In this case, the vendor auxiliary App 17 only needs to issue, to the general-purpose printer driver 16, a request to add setting items for inputting the addition position and the additional data.

In response to the addition request, the general-purpose printer driver 16 displays the setting item for inputting the background image data, the addition position, and the additional data in the UI image, and receives the user operation for designating the setting items from the operation unit 14. As the addition position, the user can designate, for example, upper left coordinates and lower right coordinates of a rectangular area input to the background image. In the following description, an example using such a designation method will be described. The general-purpose printer driver 16 transmits the input background image, the addition position, and the data of a character string or an image input by the user operation to the vendor auxiliary App 17 (step S2).

Next, error processing is performed on the data received by the vendor auxiliary App 17 (step S3). In step S3, first, the vendor auxiliary App 17 calculates a horizontal length of the addition position indicated by the upper left coordinates and the right lower coordinates of the rectangular area input to the input background image and a horizontal length of the character string or the image, and compares the two lengths (step S4). In step S4, the following error processing is performed. That is, when the horizontal length of the rectangular area input to the input background image is less than the horizontal length of the character string or the image, the vendor auxiliary App 17 displays an error notification on the display unit 15. On the other hand, when the horizontal length of the rectangular area input to the input background image is larger than the horizontal length of the character string or the image, the vendor auxiliary App 17 proceeds to step S5 that is the next processing in the error processing.

In step S5, the vendor auxiliary App 17 calculates a vertical length of the addition position indicated by the upper left coordinates and the right lower coordinates of the rectangular area input to the input background image and a vertical length of the character string or the image, and compares the two lengths. In step S5, the following error processing is further performed. That is, when the vertical length of the rectangular area input to the input background image is less than the vertical length of the character string or the image, the vendor auxiliary App 17 displays the error notification on the display unit 15. On the other hand, when the vertical length of the rectangular area input to the input background image is larger than the vertical length of the character string or the image, the vendor auxiliary App 17 proceeds to step S6 that is the next processing. Of course, an order of step S4 and step S5 does not matter.

When there is no error through the error processing in step S3, or when there is no error due to a correction operation on at least one of the addition position and the additional data, the vendor auxiliary App 17 performs an image replacement (step S6). Specifically, the vendor auxiliary App 17 replaces the image at the addition position in the input background image, with a top left corner of the input background image being an origin coordinate, with a raster image of the character string or the image designated from upper left coordinates indicated by the addition position. Then, the vendor auxiliary App 17 may generate printing data for causing the printer A (31) to print the replaced image, and transmit a printing job including the generated printing data via the general-purpose printer driver 16 or directly to the printer A (31).

As described in the first example of the generation processing, the generation processing may be processing of generating a corrected image in which an image indicated by the additional data is added to the addition position of the image indicated by the printing data, and generating a printing job for printing the corrected image as the printing job.

### Second Example of Generation Processing

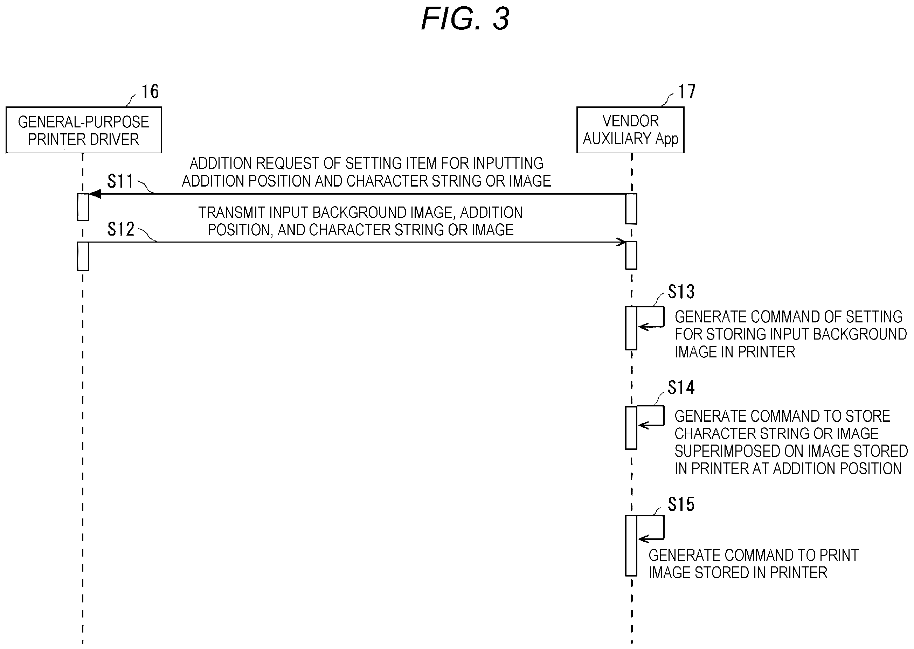

Next, a more specific example of the generation processing when the printer A (31) has a graphic storage function will be described with reference to FIG. 3 as a second example of the generation processing included in the printing processing according to the embodiment. FIG. 3 is a sequence diagram illustrating the second example of the generation processing in the printing system 100 in FIG. 1.

First, processing similar to steps S1 and S2 in FIG. 2 is performed (steps S11 and S12). Accordingly, the input background image, the addition position, and the data of the character string or the image are input to the vendor auxiliary App 17.

Next, the vendor auxiliary App 17 generates a command of a setting for storing data of the input background image data in the printer A (31) (step S13). Next, the vendor auxiliary App 17 generates a command to store the character string or the image superimposed on the image stored in the printer at the addition position and adds the command after the command generated in step S13 (step S14).

Then, the vendor auxiliary App 17 generates a command to print the image stored in the printer A (31) and adds the command after the command generated in step S14 (step S15). The vendor auxiliary App 17 may transmit a printing job formed by the command generated in step S15 via the general-purpose printer driver 16 or directly to the printer A (31).

As described in the second example of the generation processing, the generation processing may be processing of generating a printing job including the image indicated by the printing data, the addition position, and the additional data as the printing job.

### First Example of Printing Processing: Example of Serial Number Printing Processing

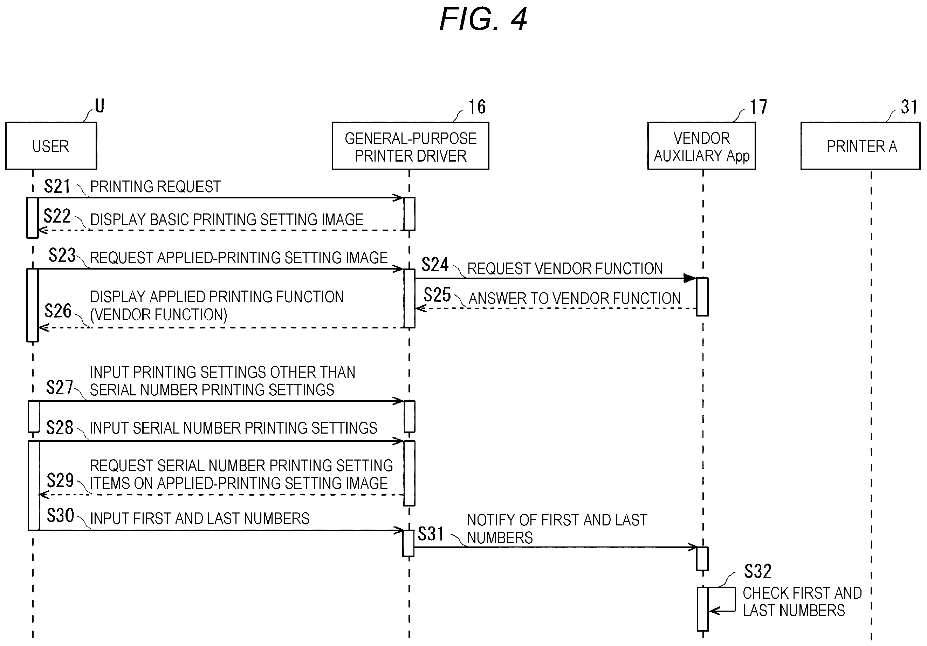

An example of serial number printing processing will be described with reference to FIGS. 4 to 8 as a first example of the printing processing according to the embodiment. In the following serial number printing processing, the generation processing described in FIG. 2 or 3 is also performed.

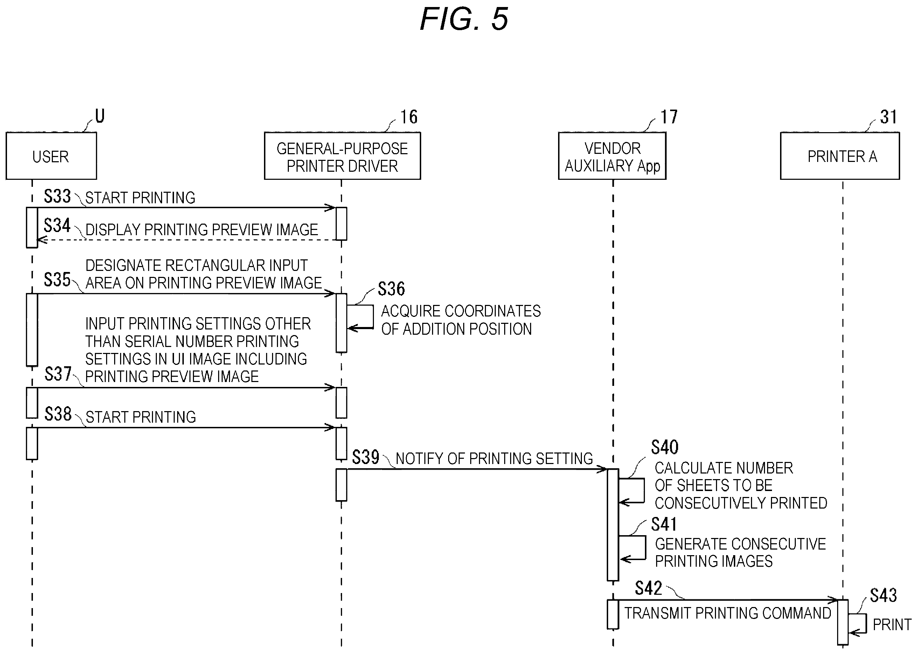

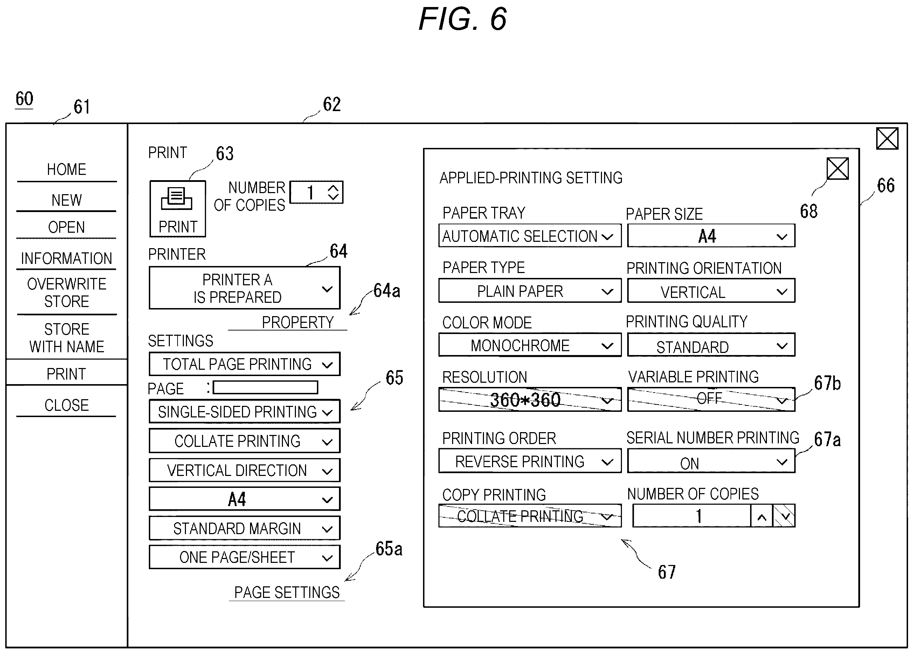

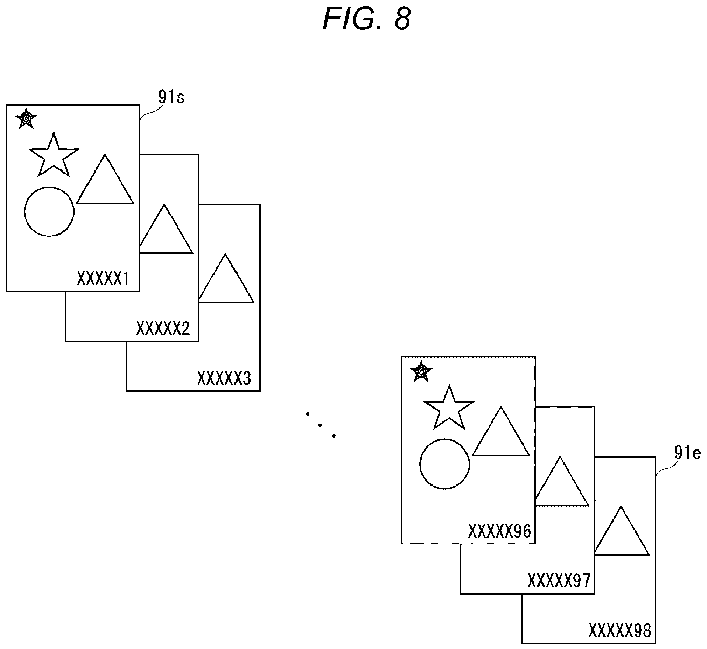

FIG. 4 is a sequence diagram illustrating an example of the serial number printing processing in the printing system 100 in FIG. 1. FIG. 5 is a sequence diagram following FIG. 4. FIG. 6 is a diagram illustrating an example of a UI image displayed in the serial number printing processing in FIGS. 4 and 5. FIG. 7 is a diagram illustrating another example of the UI image displayed in the serial number printing processing in FIGS. 4 and 5. FIG. 8 is a schematic diagram illustrating an example of a series of printed matters printed in the serial number printing processing in FIGS. 4 and 5.

First, a user U starts an application program for, for example, starting and editing a file to be printed such as a document file. Then, the user U performs, by the operation unit 14, an operation of selecting the printer A (31) in the printing setting of the file to be printed and selecting a property. By such an operation, the general-purpose printer driver 16 receives a printing request (step S21). Alternatively, when the user U performs an operation of selecting and printing the file to be printed with the operation unit 14, the general-purpose printer driver 16 receives a predetermined printing request for printing by the printer A (31).

In response to such a printing request from the user U, the general-purpose printer driver 16 displays a basic printing setting image as the UI image (step S22). The basic printing setting image is a UI image for receiving a user operation for performing a basic setting that is a setting basic for printing. For example, the basic printing setting image can be an image of a portion excluding an applied-printing setting image 66 in the UI image 60 illustrated in FIG. 6, or an image of a portion excluding the applied-printing setting image 66 and an application function selection image 61. Hereinafter, the basic printing setting image will be referred to as a basic printing setting image 62. For example, the basic printing setting image 62 can include a printing button 63 for starting printing, a pull-down menu 64 for selecting a printer, and a basic setting item group 65 for performing various basic settings. In the basic printing setting image 62, the number of copies can also be set. The application function selection image 61 includes buttons for performing printing, and the basic printing setting image 62 in step S22 may be displayed in a stage in which the buttons for performing printing are displayed. The application function selection image 61 can include buttons for selecting a basic function such as a button for opening a file and a button for overwriting and storing.

The basic setting item group 65 can include, for example, selection of a page on which printing is to be performed, selection of single-sided printing or double-sided printing, selection of performing collate printing or performing printing in units of pages, and selection of performing vertical printing or lateral printing. The basic setting item group 65 can further include selection of a sheet, selection of a margin size, and the number of pages to be aggregated on one sheet.

The basic printing setting image 62 can further include a property button 64a for setting a property of a printer selected in the pull-down menu 64, in this example the printer A (31), and a page setting button 65a for setting page details. When the property button 64a is selected, the applied-printing setting image 66 is displayed. When the page setting button 65a is selected, a printing setting image unique to the application program for starting the file to be printed can be displayed, though not illustrated.

Hereinafter, a case in which the property button 64a is selected when the printer A (31) is selected in the basic printing setting image 62 will be described.

When the user U selects the property button 64a by the operation unit 14, the user U requests the general-purpose printer driver 16 to display the applied-printing setting image (step S23). In response to this request, the general-purpose printer driver 16 requests the vendor auxiliary App 17 for an applied-printing setting item that can be set as a vendor function (step S24). The vendor auxiliary App 17 transmits a predetermined applied-printing setting item to the general-purpose printer driver 16 as an answer to this request (step S25). In response to this answer, the general-purpose printer driver 16 display, on the display unit 15, the UI image 60 in which the applied-printing setting items that can be set as the vendor function is embedded in a predetermined UI image (step S26).

Accordingly, the UI image 60 includes the applied-printing setting image 66 including the applied-printing setting item 67. However, it is also possible to display the applied-printing setting image 66 as a UI image separate from the basic printing setting image 62. Instead of the general-purpose printer driver 16, the vendor auxiliary App 17 itself may display the UI image 60 on the display unit 15.

The applied-printing setting image 66 can include items that can be set in the basic printing setting image 62 as the applied-printing setting item 67. In the first example described here, the applied-printing setting item 67 includes a pull-down menu 67a for switching on and off of serial number printing. The applied-printing setting item 67 can further include a pull-down menu 67b for switching on and off of variable printing. As illustrated in FIG. 6, when the pull-down menu 67a of the serial number printing is turned on, a pull-down menu of an item that cannot be selected correspondingly, for example, the pull-down menu 67b, may be grayed out. When a pull-down menu of a certain item is turned on, a pull-down menu of an item that cannot be selected correspondingly may be grayed out, not limited to the pull-down menu 67a. The applied-printing setting image 66 may include a close button 68 for closing the UI image itself. Other menus such as radio buttons may be used instead of the pull-down menu.

Next, when the UI image 60 is displayed by the processing in step S26, the user U inputs, with the operation unit 14, printing settings other than a serial number printing setting, such as settings of paper tray, paper size, and paper type (step S27). Step S27 may be performed, for example, at any timing after processing in step S28 and before processing in step S33 to be described later.

Subsequent to step S27, when the user U selects the close button 68 when the pull-down menu 67a for serial number printing is turned on, in response to this selection, the general-purpose printer driver 16 receives an input of the serial number printing setting (step S28). In response to this input, the general-purpose printer driver 16 displays a UI image for the serial number printing settings (not illustrated) as a part of the vendor function. By displaying the UI image for the serial number printing setting, the general-purpose printer driver 16 requests the user U to input serial number printing setting items (step S29).

In serial number printing, serial numbers are printed in sequence on a medium using a common background image. Therefore, the UI image for the serial number printing setting may include, for example, an input location for serial number printing, a first number to be input, the number of sheets to be printed, and the like as the serial number printing setting items. The last number can be calculated from a value of the number of sheets to be printed and the first number, and the last number may be input directly instead of based on the number of sheets to be printed. The serial number printing setting items can also include an item for setting a number font.

Of course, even when such a UI image for the serial number printing setting is not separately displayed, such serial number printing setting items may be included in the applied-printing setting image 66 itself. In this case, in the applied-printing setting image 66, the serial number printing setting items, such as the first number and the last number, may be made inputtable from a grayed-out state when the pull-down menu 67a for serial number printing is switched from an off state to an on state. If the specifications are based on the assumption that serial number printing is limited to printing one copy of each number, the number of copies, which is one setting in the applied-printing setting item 67, can be read, and a value thereof can be used as the number of sheets to be printed.

Then, the general-purpose printer driver 16 receives, from the operation unit 14, the input of the first number and the input of the last number or the number of sheets to be printed in the UI image for the serial number printing setting (step S30). In response to this input, the general-purpose printer driver 16 notifies the vendor auxiliary App 17 of the first number and the last number or the number of sheets to be printed (step S31).

In response to this notification, the vendor auxiliary App 17 checks whether the input of the first number and the last number or the number of sheets to be printed for serial number printing is a number (step S32). In step S32, if the input is not a numeral, the user U may be notified and prompted to re-input, and if the input is a number, the processing may proceed to the next step. In a configuration in which the input of the number of sheets to be printed is received in step S30, the last number may be calculated by dividing the value of the number of sheets to be printed by the first number and adding 1 thereof at the time of the check in step S32 or before the notification in step S31.

Next, when the user U selects the printing button 63, for example, the general-purpose printer driver 16 receives a printing start request (step S33). In response to the printing start request, the general-purpose printer driver 16 displays the UI image including a printing preview image on the display unit 15, thereby presenting the preview image to the user U (step S34). The UI image is a printing preview image corresponding to serial number printing as one of the vendor functions.

The UI image displayed in step S34 may be, for example, a UI image including setting items and a preview image 80 including a background image 83, such as a UI image 70 illustrated in FIG. 7. The UI image 70 can include, for example, a check box 71 for setting whether to print all the numbers consecutively, an input field 72 of the first number, and an input field 73 of the last number, as the setting items. The UI image 70 can include an input field 74 of a watermark, an input field 75 of a character size of the watermark and the number, and a button 76 for shifting to a UI image that enables position change of the watermark, as the setting items. The watermark can refer to a character string that is attached to a number at a predetermined position. This position change can be set by selecting the button 76. The UI image 70 can include other items, such as a check box 77 for setting whether to add a logo mark to the upper left corner, as the setting items.

The UI image 70 includes a cancel button 79 for canceling the setting and returning to the previous UI image, and a printing button 78 for storing the setting and performing printing. The printing button 78 may be a button for returning to the previous UI image to store the setting and perform printing. The UI image 70 can further include buttons 81 and 82 above or below the preview image 80 for moving the page displayed as the preview image 80 forward and backward.

In the preview image 80, a rectangular input area 85 having a predetermined size is additionally displayed on the background image 83. The input area 85 is an area in which numbers of the serial number printing, or numbers of the serial number printing and a watermark, are input. The input area 85 is displayed to be capable of receiving a user operation for moving, enlarging, and reducing the rectangle. The numbers of the serial number printing or the numbers of the serial number printing and the watermark are printed in a size and at a position determined by the user operation. The movement of the rectangle can be received, for example, by selecting and dragging the input area 85, or by selecting and dragging a vertex of the rectangle.

The preview image 80 is an image that reflects the contents set in the setting items, including a reflection of the numbers and the like in the input area 85. Even when the numbers and the like are not reflected in the input area 85, a character string such as a standard "xx" can be used instead of numbers. When the check box 77 is selected, a predetermined logo mark 84 is included in the preview image 80.

When the UI image 70 is displayed, the user U inputs the serial number printing setting items, thereby inputting the serial number printing setting items to the general-purpose printer driver 16 (step S35). The setting item received in step S35 also includes an input of the operation of moving, enlarging, or reducing the input area 85 displayed as a rectangle on the printing preview image 80. Input processing in step S35 may be executed in the reverse order to processing in step S37 to be described later.

Then, based on the position and the size of the input area 85 in the background image 83 received in step S35, the general-purpose printer driver 16 acquires upper left coordinates and lower right coordinates of the input area 85 as coordinates of the addition position (step S36).

Next, the user U inputs setting items other than the serial number printing, thereby inputting the setting items to the general-purpose printer driver 16 (step S37). The setting items other than the serial number printing are not illustrated in the UI image 70, but if the setting items include the setting items included in the applied-printing setting image 66, such input is possible. Alternatively, the UI image 70 may be displayed to include the applied-printing setting image 66.

Next, when the user U selects the printing button 78, the general-purpose printer driver 16 receives a printing start request (step S38). In response to this request, the general-purpose printer driver 16 notifies the vendor auxiliary App 17 of the printing setting input by the user U (step S39).

In response to this notification, the vendor auxiliary App 17 calculates the number of sheets to be consecutively printed by subtracting the "first number" from the "last number + 1" inputted by the user U, and changes the number of pages to be printed in a printing command to the calculated number of sheets to be consecutively printed (step S40).

Next, the vendor auxiliary App 17 generates a first image by substituting 0 for n based on "first number + n" at a designation position calculated from the designated input area 85 on the background image which is a printing image received from the general-purpose printer driver 16 (step S41). In step S41, the vendor auxiliary App 17 generates the next image by adding 1 to n based on "first number + n" at the above-described designation position on the background image received from the general-purpose printer driver 16, and repeats the image generation until n becomes the "last number". In this way, in step S41, consecutive printing images are generated. In step S41, the generation processing described with reference to FIG. 2 or 3 is performed. Before the generation processing, whether the printer A (31) supports storage of graphics may be determined by using the IPP Attribute.

Next, the vendor auxiliary App 17 transmits the generated printing command to the printer A (31) as the printing job (step S42). The communication between the vendor auxiliary App 17 and the printer A (31) may be performed according to vendor-extended IPP protocol, or other SNMP or vendor-specific protocols. SNMP is an abbreviation for simple network management protocol.

The printer A (31) receives the printing command as the printing job and performs printing (step S43). By the printing, printed matters of a number obtained by subtracting the first number from the last number and adding 1 thereto, having the image as displayed in the preview image 80 and with serial numbers from the first number to the last number being recorded on media, are produced. For example, for the preview image 80 in FIG. 7, printed matters as exemplified in printed matters 91s to 91e in FIG. 8 are produced. Here, the printed matter 91s is a first printed matter, and the printed matter 91e is a last printed matter.

In the above-described example, the printing command is transmitted directly to the printer A (31) in step S31 without going through the general-purpose printer driver 16. The vendor auxiliary App 17 may transmit the printing command to the general-purpose printer driver 16. In this case, in response to this printing command, the general-purpose printer driver 16 may transmit the printing command to the printer A (31).

As illustrated in the UI image 70 in FIG. 7, the UI image for causing the user U to designate the additional data and the addition position includes the printing preview image of the printing data acquired in the acquisition processing and can be a UI image for allowing the user to designate the addition position on the printing preview image.

As exemplified in step S34, the display processing can be processing of displaying the UI image on the general-purpose printer driver 16. Of course, the display processing may be processing of displaying the UI image by the vendor auxiliary App 17.

As illustrated in the example of the serial number printing processing, the printing system 100 can perform serial number printing as an example of printing using the image difference by introducing the vendor auxiliary App 17 that uses the image difference. Therefore, in the printing system 100, even when the user U does not prepare a plurality of images, it is possible to perform serial number printing by designating the background image and the input field of the characters and inputting the number of sheets to be printed.

### Second Example of Printing Processing: Example of Variable Printing Processing

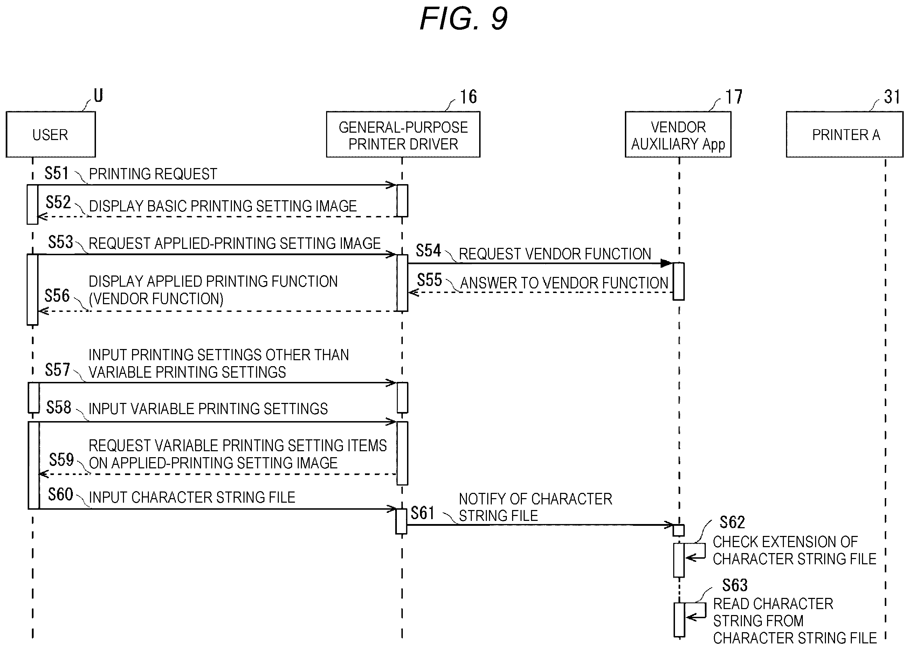

An example of variable printing processing will be described with reference to FIG9. 4 to 11 as a second example of the printing processing according to the embodiment. In the following variable printing processing, the generation processing described in FIG. 2 or 3 is also performed.

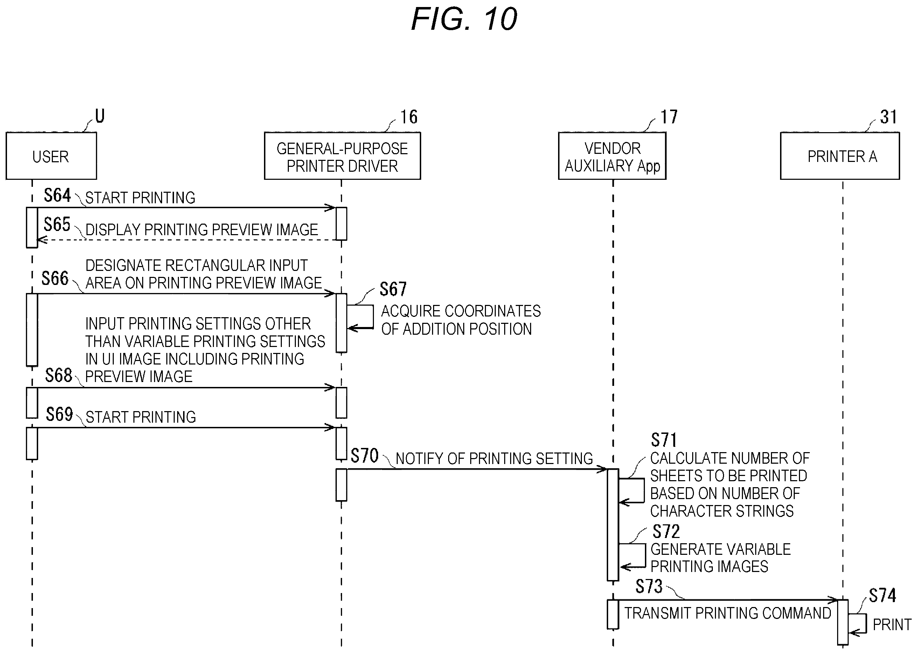

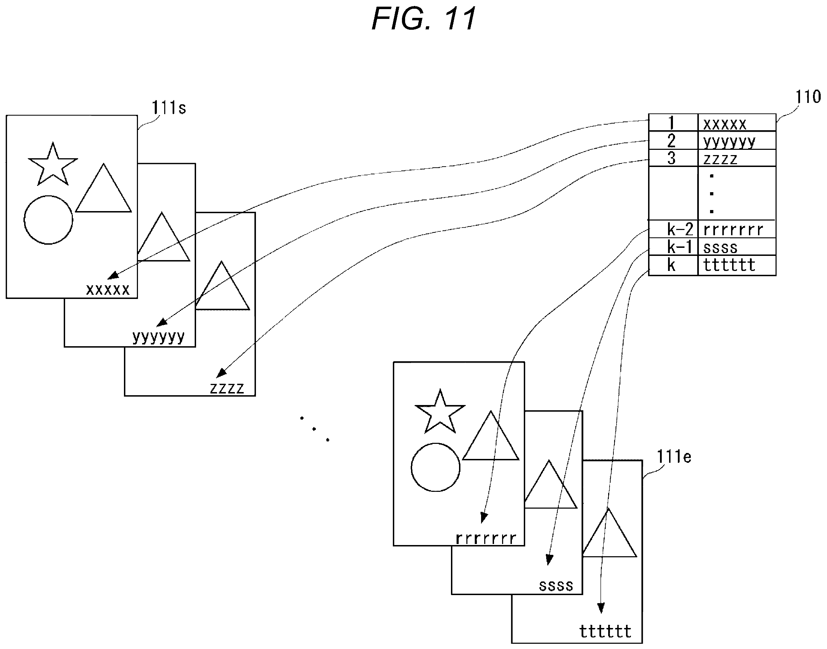

FIG. 9 is a sequence diagram illustrating an example of the variable printing processing in the printing system 100 in FIG. 1. FIG. 10 is a sequence diagram following FIG. 9. FIG. 11 is a schematic diagram illustrating an example of a character string file referred to in the variable printing processing in FIGS. 9 and 10, and illustrating an example of a series of printed matters printed in the variable printing processing with reference to the character string file. Hereinafter, changes from the first example are mainly described as the second example, and other points including applications in various application examples are the same.

In the example of the variable printing processing which is the second example, similarly to the first example, in the display processing, the display unit 15 displays the UI image for allowing the user to designate the additional data to be added to the printing data and the addition position of the additional data in the printing data. However, the second example is different from the first example in which the serial number printing is performed and the additional data includes consecutive numbers in that the additional data needs to be individually designated. Therefore, in the display processing in the second example, a UI image for allowing the user to designate a file in which a character string indicating the additional data is described is displayed as a part of the UI image for allowing the user U to designate the additional data and the addition position or as a UI image different from the UI image. Since the file includes character strings to be additionally printed on the printed matters, different additional data can be individually designated for the printed matters.

Therefore, even in the second example, the processing in steps S21 to S26 of the first example is applied (steps S51 to S56). Accordingly, the UI image 60 illustrated in FIG. 6 includes the applied-printing setting image 66 including the applied-printing setting item 67. However, the applied-printing setting image 66 may be displayed as a UI image different from the basic printing setting image 62.

As described above, the applied-printing setting image 66 can include the pull-down menu 67b for switching on and off of the variable printing as the applied-printing setting item 67. When the pull-down menu 67b of the variable printing is turned on, a pull-down menu of an item that cannot be selected correspondingly, for example, the pull-down menu 67a, may be grayed out.

Next, when the UI image 60 is displayed by the processing in step S56, the user U inputs, with the operation unit 14, printing settings other than a variable printing setting, such as settings of paper tray, paper size, and paper type (step S57). Step S57 may be performed, for example, at any timing after processing in step S58 and before processing in step S64 to be described later.

Subsequent to step S57, when the user U selects the close button 68 when the pull-down menu 67b for variable printing is turned on, in response to this selection, the general-purpose printer driver 16 receives an input of the variable printing setting (step S58). In response to this input, the general-purpose printer driver 16 displays a UI image for the variable printing settings (not illustrated) as a part of the vendor function. By displaying the UI image for the variable printing setting, the general-purpose printer driver 16 requests the user U to input variable printing setting items (step S59).

In the variable printing, individually designated character strings are printed in sequence on media using a common background image. Images may be used instead of the character strings. Therefore, the UI image for the variable printing setting may include, for example, an input location for variable printing and individual character strings to be input, as the variable printing setting items. For example, the character strings can be designated in the character string file stored in advance in the storage unit 12. The variable printing setting items can also include an item for setting a font of an input character string. For example, a configuration in which a character string can be divided into a plurality of character strings and processed may be used, and an item for setting a font for each character string may be prepared.

Of course, even when such a UI image for the variable printing setting is not separately displayed, such variable printing setting items may be included in the applied-printing setting image 66 itself. In this case, in the applied-printing setting image 66, the setting item for the input file may enable the file designation from a grayed-out state when the pull-down menu 67b for variable printing is switched from an off state to an on state.

Then, the general-purpose printer driver 16 receives, from the operation unit 14, a designation input of the character string file in which individual character strings are described in the UI image for the variable printing setting (step S60). In response to this input, the general-purpose printer driver 16 notifies the vendor auxiliary App 17 of the character string file (step S61). This notification may be a storage address of the character string file.

In response to this notification, the vendor auxiliary App 17 checks whether an extension of the character string file is a specific extension that can be supported (step S62). For example, the vendor auxiliary App 17 may be designed to be compatible with a general-purpose extension such as csv as a specific extension. In step S62, if the extension is not compatible, the user U may be notified and prompted to re-input the character string file. If the extension is compatible, the processing may proceed to the next step.

Next, the vendor auxiliary App 17 reads the character string file for the variable printing, divides the input data at each comma (,), and acquires the character string as the input character string (step S63).

Next, as in step S33 in FIG. 5, when the user U selects the printing button 63, for example, the general-purpose printer driver 16 receives a printing start request (step S64). In response to the printing start request, as in step S34 in FIG. 5, the general-purpose printer driver 16 displays the UI image including the printing preview image on the display unit 15, thereby presenting the preview image to the user U (step S65).

The UI image is a printing preview image corresponding to variable printing as one of the vendor functions. Although not illustrated, the UI image illustrated in step S65 may be a UI image including setting items and the preview image 80 including the background image 83, as in the UI image 70 illustrated in FIG. 7 illustrated as the UI image displayed in step S34. These setting items are different from those in the example of the serial number printing processing which is the first example. For example, the UI image illustrated in step S65 may include, as the setting items, a check box for setting whether to print all the copies consecutively and a button for switching to a UI image for designating a character string file. Of course, this UI image can include an input field of a watermark, an input field of a character size of the watermark, and a button for shifting to a UI image that enables position change of the watermark, as the setting items. The UI image can include other items, such as a check box for setting whether to add a logo mark to the upper left corner, as the setting items.

Similarly to the UI image 70, the UI image can include the cancel button 79 and the printing button 78, and can further include the buttons 81 and 82 above or below the preview image 80 for moving the page displayed as the preview image 80 forward and backward.

Even in the example of the variable printing processing, in the preview image 80, the rectangular input area 85 having a predetermined size is additionally displayed on the background image 83. However, the input area 85 in this example indicates an area to which a character string designated by the character string file is input.

The preview image 80 is an image that reflects the contents set in the setting items, including a reflection of the character strings and the like in the input area 85. Even when the character strings and the like are not reflected in the input area 85, a fixed character string such as "xx" can be used instead of the character string. When the check box 77 is selected, the predetermined logo mark 84 is included in the preview image 80.

In step S65, when the UI image including the preview image 80 is displayed, the user U inputs the variable printing setting items, thereby inputting the variable printing setting items to the general-purpose printer driver 16 (step S66). Similarly to the setting items received in step S35, the items received in step S66 include an input of an operation of moving, enlarging, and reducing the input area 85 displayed as a rectangle on the printing preview image 80. Input processing in step S66 may be executed in the reverse order to processing in step S68 to be described later. In this way, in the example of the variable printing processing, an input item for the input character strings, which includes the setting of the input portion for the variable printing and the designation of the character string file, is added to the printing setting items displayed by the general-purpose printer driver 16.

Then, based on the position and the size of the input area 85 in the background image 83 received in step S66, the general-purpose printer driver 16 acquires upper left coordinates and lower right coordinates of the input area 85 as coordinates of the addition position (step S67) as in step S36.

Next, the user U inputs setting items other than the variable printing, thereby inputting the setting items to the general-purpose printer driver 16 (step S68). The setting items other than the variable printing are the same as the setting items other than the serial number printing.

Next, as in step S38, when the user U selects the printing button 78, the general-purpose printer driver 16 receives a printing start request (step S69). In response to this request, the general-purpose printer driver 16 notifies the vendor auxiliary App 17 of the printing setting input by the user U (step S70) as in step S39.

In response to this notification, the vendor auxiliary App 17 calculates the number of sheets to be printed based on the number of character strings included in the character string file input by the user U, and changes the number of pages to be printed in the printing command to the calculated number of sheets to be printed (step S71).

Next, the vendor auxiliary App 17 generates a first image based on an n-th character string described in the character string file at the designation position calculated from the designated input area 85 on the background image which is the printing image received from the general-purpose printer driver 16 (step S72) One image is generated by substituting 0 for n. In step S72, the vendor auxiliary App 17 then generates the next image by adding 1 to n based on the n-th character string described in the character string file at the above-described designation position on the background image received from the general-purpose printer driver 16, and repeats the image generation until n becomes the number of the input character strings. Repeating processing until n becomes the number of input character strings means repeating the processing until the last character string described in the character string file.

In this way, in step S72, variable printing images are generated. In step S72, the generation processing described with reference to FIG. 2 or 3 is performed. Before the generation processing, whether the printer A (31) supports storage of graphics may be determined by using the IPP Attribute.

Next, as in step S 42, the vendor auxiliary App 17 transmits the generated printing command to the printer A (31) as the printing job (step S73). Also in this example, the vendor auxiliary App 17 may transmit the printing command to the printer A (31) via the general-purpose printer driver 16.

As in step S43, the printer A (31) receives the printing command as the printing job and performs printing (step S74). By the printing, the printed matters of the number of sheets to be printed calculated in step S71, having the image as displayed in the preview image 80 and with character strings being recorded on media, are produced.

For example, when a character string file 110 as illustrated in FIG. 11 is input in the image indicated by the preview image 80 in FIG. 7, when the logo mark is not designated, printed matters as illustrated in printed matters 111s to 111e in FIG. 11 are produced. Here, the printed matter 111s is a first printed matter, and the printed matter 111e is a last printed matter. In FIG. 11, an arrow indicates a correspondence relationship between each character string of the first to a k-th character string in the character string file 110 and a character string in the printed matter.

In FIG. 11, a file is illustrated in which each character string is assigned a serial number from 1 to k and a character string is defined for each number as the character string file, but the serial numbers may not be present. When an image is used instead of each character string, the image may be attached to the file, or a link destination to the image may be described.

As illustrated in the example of the variable printing processing, the printing system 100 can perform variable printing as an example of printing using the image difference by introducing the vendor auxiliary App 17 that uses the image difference. Therefore, in the printing system 100, it is possible to perform variable printing by inputting a background image, character strings, or a character string file without preparing a plurality of images by the user U.

### Other Modifications

The present disclosure is not limited to the embodiment described above and can be changed as appropriate without departing from the gist of the present disclosure. For example, the system configuration of the printing system, the configurations of the devices implementing the system, the configurations of the programs included in each device, the processing procedures of each device, and the like are not limited to the exemplified ones. The printing system may also use a network configuration in which a terminal device is connected to a printer via a print server. In the embodiment described above, the printing system performs both the serial number printing processing and the variable printing processing, and may perform only one of the serial number printing processing and the variable printing processing.

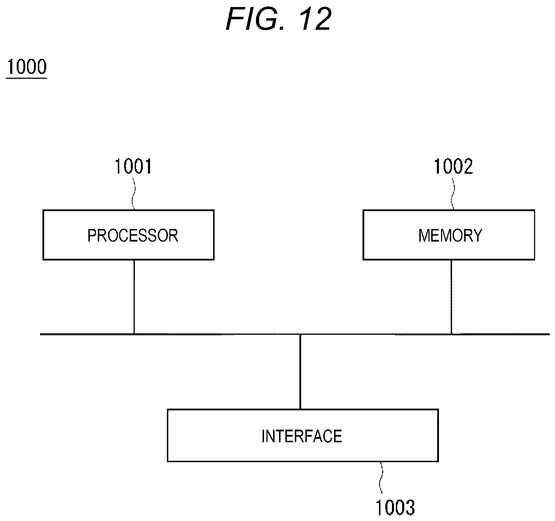

Each device included in the printing system according to the embodiment described above may have, for example, the following hardware configuration. Here, each device includes the terminal device and the printers in the example illustrated in FIG. 1. FIG. 12 is a diagram illustrating an example of a hardware configuration of a device.

A device 1000 illustrated in FIG. 12 can include a processor 1001, a memory 1002, and an interface 1003. The interface 1003 can include, for example, a communication interface or an interface with an input and output device, which are necessary depending on the device.

The processor 1001 may be, for example, a CPU, a GPU, or a micro processor unit (MPU) also referred to as a microprocessor. The processor 1001 may include a plurality of processors. The memory 1002 is implemented by, for example, a combination of a volatile memory and a nonvolatile memory. Functions of each device are implemented by the processor 1001 reading a program stored in the memory 1002 and executing the program while exchanging necessary information via the interface 1003.

The program described above includes a command group (or software codes) for causing a computer to perform one or more functions described in the embodiment when the program is read in the computer. The program may be stored in a non-transitory computer-readable medium or a tangible storage medium. Not as a limitation but as an example, the computer-readable medium or the tangible storage medium includes a random-access memory (RAM), a read-only memory (ROM), a flash memory, a solid-state drive (SSD), or another memory technology. Not as a limitation but as an example, the computer-readable medium or the tangible storage medium includes a CD-ROM, a digital versatile disc (DVD), a Blu-ray (registered trademark) disk, or another optical disc storage, a magnetic cassette, a magnetic tape, a magnetic disk storage, or another magnetic storage device. The program may be transmitted on a transitory computer-readable medium or a communication medium. Not as a limitation but as an example, the transitory computer-readable medium or the communication medium includes a propagation signal of an electric, optical, acoustic, or another form. The program is included in a program product.

The present disclosure is described with reference to the above-described embodiment. The present disclosure is not limited only to the configuration in the above-described embodiment, and it goes without saying that the present disclosure includes various variations, modifications, and combinations that can be achieved by those skilled in the art within the scope of the disclosure in the claims of the present application.

## Claims

1. A non-transitory computer-readable storage medium storing a printing control program, the printing control program causing a computer to execute:
acquisition processing of acquiring printing data from an operating system, OS, general-purpose printing program (16);
display processing of displaying a user interface image (70) for allowing a user (U) to designate additional data to be added to the printing data and an addition position of the additional data in the printing data;
generation processing of generating a printing job for performing printing in which the additional data is added to the printing data at the addition position; and
instruction processing of causing a printer (31; 32; 33) to perform printing based on the printing job;
wherein the user interface image includes a printing preview image (80) of the printing data acquired in the acquisition processing, and the user designates the addition position on the printing preview image; and
wherein the display processing is processing that causes the OS general-purpose printing program to display the user interface image.

2. The non-transitory computer-readable storage medium storing the printing control program according to claim 1, wherein
the printing control program is a print support application (17).

3. The non-transitory computer-readable storage medium storing the printing control program according to claim 1, wherein
in the generation processing, a corrected image obtained by adding an image indicated by the additional data to an image indicated by the printing data at the addition position is generated, and a printing job for printing the corrected image is generated as the printing job.

4. The non-transitory computer-readable storage medium storing the printing control program according to claim 1, wherein
in the generation processing, a printing job including an image indicated by the printing data, the addition position, and the additional data is generated as the printing job.

5. The non-transitory computer-readable storage medium storing the printing control program according to claim 1, wherein
in the display processing, a user interface image for allowing the user to designate a file in which a character string indicating the additional data is described is displayed as a part of the user interface image or as a user interface image different from the user interface image.

6. A printing system (100) comprising:
a printer (31; 32; 33); and
a terminal device (10), wherein the terminal device includes
an operating system, OS, general-purpose printing program (16),
an acquisition processing unit configured to acquire printing data from the OS general-purpose printing program,
a display processing unit configured to display a user interface image (70) for allowing a user (U) to designate additional data to be added to the printing data and an addition position of the additional data in the printing data,
a generation processing unit configured to generate a printing job for performing printing in which the additional data is added to the printing data at the addition position, and
an instruction processing unit configured to cause the printer to perform printing based on the printing job;
wherein the user interface image includes a printing preview image (80) of the printing data acquired by the acquisition processing unit, and the user designates the addition position on the printing preview image; and
wherein the display processing unit is configured to cause the OS general-purpose printing program to display the user interface image.

7. A printed matter production method comprising:
acquisition processing of acquiring printing data from an operating system, OS, general-purpose printing program (16);
display processing of displaying a user interface image (70) for allowing a user (U) to designate additional data to be added to the printing data and an addition position of the additional data in the printing data;
generation processing of generating a printing job; and
printing processing of performing printing based on the printing job by a printer (31; 32; 33) to produce a printed matter in which the additional data is added to the printing data at the addition position;
wherein the user interface image includes a printing preview image (80) of the printing data acquired in the acquisition processing, and the user designates the addition position on the printing preview image; and
wherein the display processing is processing that causes the OS general-purpose printing program to display the user interface image.

## Patentansprüche

1. Nichttransitorisches computerlesbares Speichermedium, das ein Drucksteuerungsprogramm speichert, wobei das Drucksteuerungsprogramm einen Computer veranlasst, Folgendes auszuführen:
Erfassungsverarbeitung zum Erfassen von Druckdaten von einem Betriebssystem-, OS, Allzweckdruckprogramm (16);
Anzeigeverarbeitung zum Anzeigen eines Benutzeroberflächenbildes (70), das einem Benutzer (U) ermöglicht, zusätzliche Daten, die den Druckdaten hinzuzufügen sind, und eine Hinzufügungsposition der zusätzlichen Daten in den Druckdaten anzugeben;
Generierungsverarbeitung zum Generieren eines Druckauftrags zum Durchführen eines Drucks, in dem die zusätzlichen Daten den Druckdaten an der Hinzufügungsposition hinzugefügt sind; und
Anweisungsverarbeitung zum Veranlassen eines Druckers (31; 32; 33), Drucken basierend auf dem Druckauftrag durchzuführen;
wobei das Benutzeroberflächenbild ein Druckvoransichtsbild (80) der Druckdaten beinhaltet, die in der Erfassungsverarbeitung erfasst wurden, und der Benutzer die Hinzufügungsposition auf dem Druckvoransichtsbild angibt; und
wobei die Anzeigeverarbeitung eine Verarbeitung ist, die das OS-Allzweckdruckprogramm veranlasst, das Benutzeroberflächenbild anzuzeigen.

2. Nichttransitorisches computerlesbares Speichermedium, das das Drucksteuerungsprogramm speichert, nach Anspruch 1, wobei
das Drucksteuerungsprogramm eine Druckunterstützungsanwendung (17) ist.

3. Nichttransitorisches computerlesbares Speichermedium, das das Drucksteuerungsprogramm speichert, nach Anspruch 1, wobei
in der Generierungsverarbeitung ein korrigiertes Bild generiert wird, das durch Hinzufügen eines Bildes, das durch die zusätzlichen Daten angegeben ist, zu einem Bild, das durch die Druckdaten angegeben ist, an der Hinzufügungsposition erhalten wird, und ein Druckauftrag zum Drucken des korrigierten Bildes als der Druckauftrag generiert wird.

4. Nichttransitorisches computerlesbares Speichermedium, das das Drucksteuerungsprogramm speichert, nach Anspruch 1, wobei
in der Generierungsverarbeitung ein Druckauftrag, der ein Bild, das durch die Druckdaten angegeben ist, die Hinzufügungsposition und die zusätzlichen Daten beinhaltet, als der Druckauftrag generiert wird.

5. Nichttransitorisches computerlesbares Speichermedium, das das Drucksteuerungsprogramm speichert, nach Anspruch 1, wobei
in der Anzeigeverarbeitung ein Benutzeroberflächenbild, das dem Benutzer ermöglicht, eine Datei anzugeben, in der eine Zeichenfolge, die die zusätzlichen Daten angibt, beschrieben wird, als Teil des Benutzeroberflächenbildes oder als ein Benutzeroberflächenbild, das sich von dem Benutzeroberflächenbild unterscheidet, angezeigt wird.

6. Drucksystem (100), umfassend:
einen Drucker (31, 32, 33); und
ein Endgerät (10), wobei das Endgerät beinhaltet
ein Betriebssystem-, OS, Allzweckdruckprogramm (16),
eine Erfassungsverarbeitungseinheit, die eingerichtet ist, Druckdaten von dem OS-Allzweckdruckprogramm zu erfassen,
eine Anzeigeverarbeitungseinheit, die eingerichtet ist, ein Benutzeroberflächenbild (70) anzuzeigen, das einem Benutzer (U) ermöglicht, zusätzliche Daten, die den Druckdaten hinzuzufügen sind, und eine Hinzufügungsposition der zusätzlichen Daten in den Druckdaten anzugeben;
eine Generierungsverarbeitungseinheit, die eingerichtet ist, einen Druckauftrag zum Durchführen eines Drucks zu generieren, in dem die zusätzlichen Daten den Druckdaten an der Hinzufügungsposition hinzugefügt sind; und
eine Anweisungsverarbeitungseinheit, die eingerichtet ist, den Drucker zu veranlassen, Drucken basierend auf dem Druckauftrag durchzuführen;
wobei das Benutzeroberflächenbild ein Druckvoransichtsbild (80) der Druckdaten beinhaltet, die von der Erfassungsverarbeitungseinheit erfasst wurden, und der Benutzer die Hinzufügungsposition auf dem Druckvoransichtsbild angibt; und
wobei die Anzeigeverarbeitungseinheit eingerichtet ist, das OS-Allzweckdruckprogramm zu veranlassen, das Benutzeroberflächenbild anzuzeigen.

7. Drucksachenherstellungsverfahren, umfassend:
Erfassungsverarbeitung zum Erfassen von Druckdaten von einem Betriebssystem-, OS, Allzweckdruckprogramm (16);
Anzeigeverarbeitung zum Anzeigen eines Benutzeroberflächenbildes (70), das einem Benutzer (U) ermöglicht, zusätzliche Daten, die den Druckdaten hinzuzufügen sind, und eine Hinzufügungsposition der zusätzlichen Daten in den Druckdaten anzugeben;
Generierungsverarbeitung zum Generieren eines Druckauftrags; und
Druckverarbeitung zum Durchführen eines Drucks basierend auf dem Druckauftrag durch einen Drucker (31; 32; 33), um eine Drucksache herzustellen, in der die zusätzlichen Daten den Druckdaten an der Hinzufügungsposition hinzugefügt sind;
wobei das Benutzeroberflächenbild ein Druckvoransichtsbild (80) der Druckdaten beinhaltet, die in der Erfassungsverarbeitung erfasst wurden, und der Benutzer die Hinzufügungsposition auf dem Druckvoransichtsbild angibt; und
wobei die Anzeigeverarbeitung eine Verarbeitung ist, die das OS-Allzweckdruckprogramm veranlasst, das Benutzeroberflächenbild anzuzeigen.

## Revendications

1. Support d'informations non transitoire lisible par ordinateur stockant un programme de commande d'impression, le programme de commande d'impression amenant un ordinateur à exécuter :
un traitement d'acquisition destiné à l'acquisition de données d'impression à partir d'un programme d'impression polyvalent de système d'exploitation, OS (16) ;
un traitement d'affichage destiné à l'affichage d'une image d'interface d'utilisateur (70) pour permettre à un utilisateur (U) de désigner des données supplémentaires à ajouter aux données d'impression et une position d'ajout des données supplémentaires dans les données d'impression ;
un traitement de génération destiné à la génération d'une tâche d'impression pour l'exécution d'une impression dans laquelle les données supplémentaires sont ajoutées aux données d'impression à la position d'ajout ; et
un traitement d'instructions destiné à amener une imprimante (31 ; 32 ; 33) à exécuter une impression sur la base de la tâche d'impression ;
dans lequel l'image d'interface d'utilisateur inclut une image d'aperçu avant impression (80) des données d'impression acquises dans le traitement d'acquisition, et l'utilisateur désigne la position d'ajout sur l'image d'aperçu avant impression ; et
dans lequel le traitement d'affichage est un traitement amenant le programme d'impression polyvalent d'OS à afficher l'image d'interface d'utilisateur.

2. Support d'informations non transitoire lisible par ordinateur stockant le programme de commande d'impression selon la revendication 1, dans lequel
le programme de commande d'impression est une application d'aide à l'impression (17).

3. Support d'informations non transitoire lisible par ordinateur stockant le programme de commande d'impression selon la revendication 1, dans lequel
dans le traitement de génération, une image corrigée obtenue en ajoutant une image indiquée par les données supplémentaires à une image indiquée par les données d'impression à la position d'ajout est générée, et une tâche d'impression pour l'impression de l'image corrigée est générée en tant que tâche d'impression.

4. Support d'informations non transitoire lisible par ordinateur stockant le programme de commande d'impression selon la revendication 1, dans lequel
dans le traitement de génération, une tâche d'impression incluant une image indiquée par les données d'impression, la position d'ajout et les données supplémentaires est générée en tant que tâche d'impression.

5. Support d'informations non transitoire lisible par ordinateur stockant le programme de commande d'impression selon la revendication 1, dans lequel dans le traitement d'affichage, une image d'interface d'utilisateur destinée à permettre à l'utilisateur de désigner un fichier dans lequel une chaîne de caractères indiquant les données supplémentaires est décrite est affichée comme une partie de l'image d'interface d'utilisateur ou comme une image d'interface d'utilisateur différente de l'image d'interface d'utilisateur.

6. Système d'impression (100) comprenant :
une imprimante (31 ; 32 ; 33) ; et
un dispositif terminal (10), dans lequel le dispositif terminal inclut
un programme d'impression polyvalent de système d'exploitation, OS (16),
une unité de traitement d'acquisition configurée pour acquérir des données d'impression à partir du programme d'impression polyvalent d'OS,
une unité de traitement d'affichage configurée pour afficher une image d'interface d'utilisateur (70) pour permettre à un utilisateur (U) de désigner des données supplémentaires à ajouter aux données d'impression et une position d'ajout des données supplémentaires dans les données d'impression,
une unité de traitement de génération configurée pour générer une tâche d'impression pour l'exécution d'une impression dans laquelle les données supplémentaires sont ajoutées aux données d'impression à la position d'ajout, et
une unité de traitement d'instructions configurée pour amener l'imprimante à exécuter une impression sur la base de la tâche d'impression ;
dans lequel l'image d'interface d'utilisateur inclut une image d'aperçu avant impression (80) des données d'impression acquises par l'unité de traitement d'acquisition, et l'utilisateur désigne la position d'ajout sur l'image d'aperçu avant impression ; et
dans lequel l'unité de traitement d'affichage est configurée pour amener le programme d'impression polyvalent d'OS à afficher l'image d'interface d'utilisateur.

7. Procédé de production de matière imprimée comprenant :
un traitement d'acquisition destiné à l'acquisition de données d'impression à partir d'un programme d'impression polyvalent de système d'exploitation, OS (16) ;
un traitement d'affichage destiné à l'affichage d'une image d'interface d'utilisateur (70) pour permettre à un utilisateur (U) de désigner des données supplémentaires à ajouter aux données d'impression et une position d'ajout des données supplémentaires dans les données d'impression ;
un traitement de génération destiné à la génération d'une tâche d'impression ; et
un traitement d'impression destiné à l'exécution d'une impression sur la base de la tâche d'impression par une imprimante (31 ; 32 ; 33) pour produite une matière imprimée dans laquelle les données supplémentaires sont ajoutées aux données d'impression à la position d'ajout ;
dans lequel l'image d'interface d'utilisateur inclut une image d'aperçu avant impression (80) des données d'impression acquises dans le traitement d'acquisition, et l'utilisateur désigne la position d'ajout sur l'image d'aperçu avant impression ; et
dans lequel le traitement d'affichage est un traitement amenant le programme d'impression polyvalent d'OS à afficher l'image d'interface d'utilisateur.
